Europäisches Patentamt

European Patent Office

Office européen des brevets

(19)

(11) Numéro de publication : **0 010 467**
**B1**

(12) FASCICULE DE BREVET EUROPÉEN

(45) Date de publication du fascicule du brevet :
25.07.84

(21) Numéro de dépôt : 79400684.1

(22) Date de dépôt : 27.09.79

(51) Int. Cl.³ : **C 09 J 3/14, C 08 L 29/04,
B 65 D 30/00**

(54) **Préparations adhésives à base d'alcool polyvinylique, leur application au collage des papiers et sacs en papier assemblés au moyen de celles-ci.**

(30) Priorité : 27.09.78 FR 7827618

(43) Date de publication de la demande :
30.04.80 Bulletin 80/09

(45) Mention de la délivrance du brevet :
25.07.84 Bulletin 84/30

(84) Etats contractants désignés :
**BE DE FR GB IT LU NL SE**

(56) Documents cités :
**DE-A- 2 702 260
DE-A- 2 715 434
US-A- 2 760 942**

(73) Titulaire : **LA CELLULOSE DU PIN**
**7, rue Eugène-Flachat**
**F-75849 PARIS CEDEX (FR)**

(72) Inventeur : **Chaudron, Jacques**
**294, rue Pasteur**
**F 33200 Bordeaux-Cauderan (FR)**
Inventeur : **Pijselman, Joel**
**22, rue André Gide**
**F-33400 Talence (FR)**

(74) Mandataire : **Eudes, Marcel et al**
**Saint-Gobain Recherche 39 Quai Lucien Lefranc**
**F-93304 Aubervilliers Cedex (FR)**

Jouve, 18, rue St-Denis, 75001 Paris, France

## Description

La présente invention concerne des préparations adhésives à base d'alcool polyvinylique, et leur application pour le collage du papier, en particulier pour la fabrication de sacs en papier de grande contenance.

Il est connu d'utiliser pour le collage du papier des préparations à base d'adhésifs d'origine végétale tels que des amidons, des fécules, des dextrines ou des gommes. Les adhésifs usuels contenus dans les colles destinées à la fabrication des sacs en papier de grande contenance sont généralement des amidons de blé ou de maïs, des fécules de pomme de terre, natifs ou modifiés. Ces adhésifs sont mis en solution dans l'eau, avec agitation simultanée, et sont soumis ou non à une cuisson suivant le type d'amidon utilisé et son degré de modification. On y ajoute éventuellement une faible quantité de charge ainsi que divers adjuvants tels que des agents insolubilisants, anti-mousses, stabilisants, fongicides ou autres. Les préparations adhésives finales sont utilisées alors qu'elles présentent des extraits secs relativement faibles, variant entre 15 et 30 % en poids.

L'emploi de ces colles amylacées pour la fabrication en continu des sacs en papier présente certains inconvénients. En effet, sur les chaînes de fabrication mécanisées comportant un poste de palettisation automatique et éventuellement une mise sous film rétractable à la sortie des machines de fabrication des sacs en papier, il n'est pas possible d'envisager un stockage intermédiaire prolongé. L'humidité résiduelle relativement élevée des fonds de sacs, due à la grande quantité d'eau apportée par les colles amylacées, est alors emprisonnée et ceci provoque souvent des éclatements ou ruptures des sacs lors de l'ensachage chez l'utilisateur, du fait de la diminution importante des caractéristiques mécaniques du papier lorsqu'il est trop humide.

On a aussi proposé pour le collage du papier des préparations adhésives à base de résines thermoplastiques solubles dans l'eau telles que les polyacrylates ou leurs copolymères, les éthers cellulosiques, les composés vinyliques, l'acétate de vinyle ou l'alcool polyvinylique se trouvant en solution aqueuse ou en émulsion. Cependant, la plupart des colles pour papier formées à partir de solutions aqueuses d'alcool polyvinylique, le plus souvent en combinaison avec l'acétate de polyvinyle, présentent une tenue à l'eau insuffisante pour certaines applications, en particulier pour la fabrication des sacs en papier de grande contenance. D'autre part, l'utilisation sur machine des préparations adhésives usuelles contenant de l'alcool polyvinylique mais possédant une meilleure tenue à l'eau entraîne de nouvelles difficultés : en effet, après un arrêt plus ou moins prolongé des machines, les rouleaux enducteurs se trouvent recouverts d'un film de colle séché qui ne s'élimine plus et qui nécessite une opération de nettoyage supplémentaire avant chaque remise en marche. De plus, ces colles laissent aussi une humidité résiduelle trop importante dans les fonds de sac.

Les préparations adhésives, objet de l'invention sont des préparations aqueuses comprenant de l'alcool polyvinylique, éventuellement une charge minérale, et un agent fluidisant et/ou un agent à la fois rétenteur d'eau et fluidisant.

Elles possèdent des teneurs en extrait sec très élevées, comprises entre 30 et 55 %, pouvant s'élever jusqu'à 60 %. De préférence, elles possèdent un extrait sec compris entre 35 et 50 % environ. Ces valeurs sont déterminées après étuvage à 60 °C pendant 30 minutes.

Leur utilisation pour le collage du papier permet d'éviter tous les inconvénients mentionnés précédemment. Elles permettent, notamment grâce à leur teneur élevée en extrait sec, de supprimer les phases d'attente entre la sortie-machine et le conditionnement, automatique ou non, des articles sur palettes. Elles présentent donc l'avantage de tirer parti au maximum de la mécanisation introduite dans les chaînes de fabrication, en particulier pour la réalisation de sacs en papier de grande contenance.

Les préparations adhésives, objet de l'invention, comprennent environ, par rapport au poids total de matières solides, 5 à 95 % d'au moins un agent fluidifiant et/ou un agent à la fois rétenteur d'eau et fluidifiant, 0 à 95 % de charge minérale, 5 à 30 % d'au moins deux alcools polyvinyliques dont les degrés d'hydrolyse sont différents.

Parmi les agents fluidifiants ou les rétenteurs d'eau fluidifiants incorporés à la préparation adhésive en combinaison avec l'alcool ou les alcools polyvinylique(s), on emploie de préférence l'urée qui présente l'avantage d'agir à la fois comme rétenteur d'eau et comme agent fluidifiant. L'urée utilisée en quantité importante permet d'une part de régler aisément la rétention d'eau de la colle finale et par conséquent son temps de prise, et d'autre part de diminuer très fortement la viscosité de la colle. D'autres produits tels que chlorure de sodium, chlorure d'ammonium, sulfate de sodium ou dicyandiamide peuvent avoir au moins l'un de ces effets.

Le principe adhésif de la colle est constitué au moins par un alcool polyvinylique possédant un degré d'hydrolyse d'environ 85 à 100 %. La viscosité de l'alcool en solution aqueuse à 4 % à 20 °C est avantageusement comprise entre 4 et 60 millipascal-seconde et de préférence entre 10 et 40 millipascal-seconde. Des alcools polyvinyliques de viscosité moins élevée peuvent être utilisés, mais au détriment des performances d'adhésivité et de tenue à l'eau.

Le choix du degré d'hydrolyse de l'alcool polyvinylique se fait aussi en fonction de la tenue à l'eau recherchée : l'utilisation d'alcool à haut degré d'hydrolyse permet d'augmenter la tenue à l'eau, mais plus cette dernière caractéristique est élevée, plus la mise en œuvre sur machine de la préparation adhésive finale risque d'être difficile par suite du dépôt sur les rouleaux enducteurs d'un film de colle résistant à l'eau.

Pour obtenir une préparation adhésive qui confère au joint de colle une excellente tenue à l'eau, une bonne résistance au choc, et qui présente en même temps une bonne « machinabilité », c'est-à-dire une bonne aptitude à être utilisée sur machine sans nettoyage des rouleaux enducteurs après un arrêt prolongé, la demanderesse a constaté qu'il était particulièrement avantageux d'employer un mélange d'au moins deux alcools polyvinyliques de degrés d'hydrolyse différents. Ce mélange peut être constitué par exemple de deux alcools polyvinyliques dont le degré d'hydrolyse est compris entre environ 85 et 93 % pour l'un et 98 à 100 % pour le second, le rapport en poids de ces deux alcools variant entre environ 1/9 et 9/1, et de préférence entre 1/3 et 3/1.

La formulation précédente améliore considérablement les performances des colles destinées en particulier à fabriquer des sacs en papier de grande contenance, et, bien que le phénomène d'interaction des différents constituants ne soit pas encore clairement expliqué, on peut supposer que l'alcool polyvinylique de degré d'hydrolyse le plus élevé se redissout dans l'alcool polyvinylique de degré d'hydrolyse plus faible qui lui-même se redissout aisément dans l'eau. Cette redissolution pourrait expliquer les performances particulièrement remarquables des préparations adhésives ainsi formulées en ce qui concerne leur « machinabilité ». On notera, à titre d'exemple, qu'un redémarrage de l'opération d'encollage peut être effectué sans nettoyage des machines enductrices après un arrêt de plus de huit jours.

Les taux d'hydrolyse, les viscosités et les proportions des différents alcools polyvinyliques peuvent être modifiés selon les applications et les matériels utilisés.

Les préparations adhésives selon l'invention peuvent avoir des teneurs en charges minérales pouvant atteindre des valeurs beaucoup plus élevées que les colles couramment utilisées pour papier tout en conservant une très bonne adhésivité. Des charges minérales de diverses natures peuvent être incorporées dans les préparations ; on peut citer parmi les plus couramment employées les craies, les carbonates de calcium naturels ou précipités, les kaolins, les argiles, les sulfates de calcium, les talcs, etc.

Outre leur principal rôle qui est d'augmenter la quantité de matière sèche et de diminuer le prix de la colle, les charges ont l'avantage de modifier l'écoulement de la colle et par conséquent d'empêcher sa migration excessive. Ceci évite le collage entre les différents plis du sac et le rendement en adhésif est ainsi amélioré. En effet, on obtient un collage identique en mettant en œuvre une plus faible quantité d'adhésif lorsque la composition contient une charge, ce qui est important dans le cas de l'utilisation d'un adhésif coûteux à performances élevées.

Certains additifs sont éventuellement incorporés aux préparations adhésives à extrait sec élevé décrites précédemment, notamment des anti-mousses ou des tensio-actifs.

Les préparations adhésives selon l'invention peuvent être associées à des compositions classiques à base d'amidon pour en renforcer les propriétés adhésives et la tenue à l'eau.

D'autres caractéristiques et avantages de l'invention ressortiront de la description suivante et des exemples particuliers de mise en œuvre, exemples destinés à permettre une meilleure compréhension de l'invention. Les compositions adhésives et leur préparation seront décrites dans ces exemples et comparées quant à leurs performances à une colle amylacée classique dont la préparation est rappelée dans l'exemple 1.

## Exemple 1

On prépare une colle amylacée classique à base d'un mélange d'amidon de maïs et de fécule de pomme de terre, ayant une teneur en matières solides de 27 parties en poids pour 100 parties de mélange aqueux. La composition exprimée en parties en poids pour 100 parties de matières solides est la suivante :

| | |
|---|---|
| — amidon de maïs | 60 % |
| — fécule de pomme de terre | 40 % |
| — talc | 5 % par rapport à l'amidon |
| — agent insolubilisant | 5 % par rapport à l'amidon |

La fécule de pomme de terre et l'amidon de maïs sont introduits dans l'eau pour former une suspension à 35 % qui est ensuite soumise, dans un réacteur à injection de vapeur, à une cuisson enzymatique. Cette cuisson se fait en continu avec introduction simultanée d'un taux d'amylase de 0,1 %. Après passage dans le réacteur et dégradation des enzymes par un jet de vapeur à environ 140 °C, le mélange est refroidi par addition d'eau. Le talc en poudre est alors ajouté à la préparation en maintenant une très forte agitation, ainsi que l'agent insolubilisant.

La colle ainsi obtenue a un extrait sec de 27 %, mesuré après étuvage à 105 °C pendant 30 minutes, et une viscosité Brookfield de 600 millipascal-seconde à 20 °C, axe 3, 100 tours/minute.

Les exemples suivants, non limitatifs, sont conformes à l'invention.

## Exemple 2

On forme une préparation adhésive aqueuse pour le collage du papier, dont la teneur théorique en matières solides est de 42 parties en poids pour 100 parties du mélange aqueux final. La composition de la colle exprimée en parties en poids pour 100 parties de matières solides est la suivante :

|  | % matières solides |
|---|---|
| — alcool polyvinylique A | 5 % |
| — alcool polyvinylique B à degré d'hydrolyse plus faible | 10 % |
| — urée | 30 % |
| — carbonate de calcium naturel à 70 % d'extrait sec | 55 % |

L'alcool polyvinylique A présente un degré d'hydrolyse de 99 à 100 % et sa viscosité Brookfield en solution aqueuse à 4 % et à 20 °C est de 30 mPa · s.

L'alcool polyvinylique B est un alcool ayant un degré d'hydrolyse de 93 % dont la viscosité Brookfield en solution à 4 % et à 20 °C est de 30 mPa · s.

Dans un cuiseur mélangeur contenant de l'eau à température ambiante, on introduit successivement l'alcool polyvinylique A puis l'alcool polyvinylique B en agitant fortement pour former une suspension à 20 % d'alcool polyvinylique. Pour cette opération, on utilise environ 50 % du volume d'eau nécessaire à la préparation de la colle. Après chauffage à 90-95 °C pendant 15 à 20 minutes jusqu'à la dissolution complète des deux alcools polyvinyliques, le reste de l'eau à température ambiante est ajouté à la solution encore chaude. On introduit ensuite l'urée en maintenant l'agitation, puis le carbonate de calcium naturel qui a préalablement été dispersé dans de l'eau. La mise en dispersion du carbonate de calcium naturel se fait séparément et de façon classique sous cisaillement élevé à l'aide de 0,40 % de polyacrylate de sodium qui agit comme dispersant chimique.

Après mélange de cette charge de carbonate de calcium, la colle est prête à l'emploi. Elle présente un extrait sec de 40 % après évaporation à l'étuve à 60 °C pendant 30 minutes. Sa viscosité Brookfield à 20 °C, axe 3, 100 tours/minute est de 700 millipascal-seconde.

Cette formulation, particulièrement bien adaptée au collage de sacs en papier de grande contenance, est aussi bien appliquée sur tubeuse que sur bottomeuse à des cadences élevées, par exemple de l'ordre de 300 cps/mn sur tubeuse et 200 cps/mn sur bottomeuse. Elle possède une excellente « machinabilité ».

La formulation adhésive préparée selon cet exemple a conduit, au cours des essais industriels de collage des sacs en papier, aux résultats présentés par le tableau I dans lequel apparaissent à titre de comparaison les résultats obtenus avec la colle amylacée classique de l'exemple 1.

Tableau I

| Caractéristiques \ Exemples | | Colle amylacée exemple 1 | Colle selon l'invention exemple 2 |
|---|---|---|---|
| Extrait sec | | 27 % | 40 % |
| pH | | 6,8 | 7,1 |
| viscosité Brookfield | | 600 | 700 |
| Collage en long sur tubeuse | Dépôt sec g/m2 | 0,50 | 0,48  :  0,28 |
| | Résistance au choc décijoule/cm | 0,50 | 0,76  :  0,51 |
| | Tenue à l'eau | 17 min. | > 7 jours |
| Collage du fond | Dépôt g/m2 | 1,80 | 1,70 |
| | Humidité sortie machine | 16 % | 13 % |

4

La résistance au choc en dJ/cm est la résistance du joint de colle sollicité selon deux directions opposées à 180° lors d'un essai au cinédynamètre. Les résultats comparatifs du tableau I montrent qu'à poids de colle sensiblement égal, cette résistance au choc est améliorée de plus de 50 % avec la formulation selon l'invention à forte teneur en extrait sec et à base de deux alcools polyvinyliques.

La tenue à l'eau correspond au temps d'immersion dans l'eau à 20 °C après lequel le joint de colle soumis à une force constante de 40 g/cm se rompt. On peut constater que cette tenue à l'eau est améliorée de façon surprenante malgré la forte proportion de charge minérale et la faible teneur en alcool polyvinylique contenues dans les colles objet de l'invention. D'autre part, cette excellente tenue à l'eau est obtenue même avec un poids de colle considérablement plus faible que dans le cas de colles amylacées classiques.

L'humidité en sortie de machine est le taux d'humidité résiduelle des fonds de sac. Cette humidité résiduelle correspond à la perte de poids de fonds de sac découpés et séchés en étuve à 105 °C pendant 60 minutes. Les valeurs du tableau I montrent aussi une nette amélioration avec la préparation adhésive selon l'invention.

## Exemple 3

On prépare une colle à partir des mêmes constituants que dans l'exemple 2, utilisés en proportions identiques. On modifie seulement l'ordre d'addition de ces constituants. Dans le cuiseur-mélangeur, contenant le carbonate de calcium naturel préalablement dispersé dans la moitié de son poids d'eau à l'aide de 0,4 % de polyacrylate en agitant constamment, on ajoute successivement eau de cuisson et alcools polyvinyliques. La quantité d'eau ajoutée est calculée pour que la cuisson s'effectue à une concentration de 35 à 40 % de matières sèches. Après cuisson de l'ensemble à 90-95 °C pendant 15 à 20 minutes, le reste de l'eau puis l'urée sont introduits.

La colle obtenue, prête à l'emploi, présente aussi un extrait sec de 40 % mais sa viscosité est de 570 mPa · s. Les performances de la colle ainsi préparée sont identiques à celles de l'exemple 2.

## Exemple 4

Dans la préparation adhésive de l'exemple 2 on remplace les alcools polyvinyliques par deux alcools différents et on modifie les proportions relatives des alcools à fort et à faible degré d'hydrolyse.

La composition de la colle, en parties en poids pour 100 parties de matières solides est la suivante :

|  | % matières solides |
|---|---|
| — alcool polyvinylique C degré d'hydrolyse = 98 % viscosité Brookfield en solution aqueuse à 4 %, 20 °C = 30 mPa · s | 10 % |
| — alcool polyvinylique D degré d'hydrolyse = 88 % viscosité Brookfield en solution aqueuse 4 %, 20 °C = 30 mPa · s. | 5 % |
| — urée | 30 % |
| — carbonate de calcium naturel à 70 % d'extrait sec | 55 % |

Le procédé de préparation de la colle, en particulier l'ordre d'introduction des divers constituants, est identique à celui de l'exemple 2.

La colle obtenue a un extrait sec de 40 %, une viscosité Brookfield à 20 °C de 750 mPa · s. (axe 3, 100 tours/minute), et un pH égal à 7. Utilisée pour le collage des mêmes sacs en papier que précédemment, elle conduit à des résultats identiques à ceux de l'exemple 2, en ce qui concerne la résistance du joint de colle et l'humidité résiduelle des fonds de sac en sortie de machine. Bien que la tenue à l'eau ne soit pas tout à fait aussi bonne, elle reste cependant très supérieure à celle de la colle amylacée.

## Exemple 5

Dans la composition adhésive de l'exemple 2, l'urée est remplacée par 30 % de chlorure de sodium. On procède de la même façon que dans cet exemple pour préparer la colle. Celle-ci possède un extrait sec de 40 % et présente une viscosité Brookfield à 20 °C de 850 mPa · s. Sa « machinabilité » au cours de l'opération d'encollage des sacs en papier est excellente et les propriétés de résistance au choc et de tenue à l'eau du joint de colle obtenu sont identiques à celles de l'exemple 2. La prise de cette colle est cependant beaucoup plus rapide, ce qui permet de l'utiliser sur des tubeuses à cadences très élevées.

## Exemple 6

On prépare selon le procédé décrit dans l'exemple 2 une colle renfermant les mêmes constituants, mais dans des proportions différentes. Sa composition en parties en poids pour 100 parties de matières solides est la suivante :

|  | % matières solides |
|---|---|
| — alcool polyvinylique A | 4 % |
| — alcool polyvinylique B | 8 % |
| — urée | 30 % |
| — carbonate de calcium naturel à 70 % d'extrait sec | 58 % |

Cette préparation adhésive a un extrait sec de 46 % et une viscosité Brookfield à 20 °C de 600 mPa · s. Elle présente une très bonne machinabilité au cours de son application pour la fabrication des sacs en papier. La résistance au choc du joint de colle étant légèrement moins élevée que celle de l'exemple 2, il est plus intéressant d'utiliser cette colle pour la fabrication de sacs à partir d'un papier de moins bonne qualité.

Exemple 7

|  | % matières solides |
|---|---|
| — alcool polyvinylique A | 5 % |
| — alcool polyvinylique B | 10 % |
| — urée | 15 % |
| — kaolin | 70 % |

Cette composition adhésive est préparée selon le procédé décrit dans l'exemple 2. La colle obtenue présente un extrait sec de 38 % et une viscosité Brookfield à 20 °C de 900 mPa · s. Les propriétés de la colle et des joints de colle obtenus sur sacs en papier de grande contenance sont équivalentes à celles de l'exemple 2.

Les préparations adhésives selon l'invention sont particulièrement intéressantes pour leur application à la fabrication de sacs en papier de grande contenance. Il faut noter cependant qu'en agissant sur certains paramètres tels que le taux d'hydrolyse, la viscosité ou les proportions des alcools polyvinyliques, les quantités et la nature de l'agent rétenteur d'eau et des charges minérales, on peut régler les caractéristiques et les performances de la colle, notamment la tenue à l'eau, le taux de rétention d'eau, les temps d'assemblage ouvert et fermé, et l'utiliser pour d'autres applications. Grâce à cette souplesse de formulation, ces préparations adhésives offrent des solutions à de nombreux autres problèmes de collage papier sur papier ; elles présentent de plus un pouvoir adhésif élevé même sur papier couché polyéthylène.

Parmi les avantages de cette colle, on peut citer encore son excellente stabilité qui rend possible son stockage pendant plus de six mois, sans risque de gel. Elle possède aussi une bonne tenue aux températures élevées (supérieures à 200 °C) et résiste parfaitement aux bactéries et champignons, ce qui évite l'emploi de fongicides.

En ce qui concerne son utilisation sur machines, il faut noter d'une part qu'elle permet de fortes cadences grâce à son « tack » humide élevé, et d'autre part que son écoulement est particulièrement bien adapté aux variations et aux écarts de vitesse rencontrés sur une ligne de fabrication avec encolleurs, trop-plein, pompes. De plus, le pH de cette colle étant voisin de la neutralité, l'usure ou l'attaque des pièces métalliques avec lesquelles elle est en contact est plus faible qu'avec un certain nombre de colles usuelles à base d'alcool polyvinylique.

**Revendications**

1. Préparation adhésive aqueuse contenant de l'alcool polyvinylique, au moins un agent fluidifiant et/ou un agent à la fois fluidifiant et rétenteur d'eau et éventuellement une charge minérale, caractérisée en ce qu'elle comprend environ, par rapport au poids total de matières solides, 5 à 95 % d'agent fluidifiant, 0 à 95 % de charge minérale, 5 à 30 % d'au moins deux alcools polyvinyliques dont les degrés d'hydrolyse sont différents et au moins égal à 98 % pour l'un et inférieur ou égal à 93 % pour l'autre, et en ce qu'elle possède une teneur en extrait sec comprise entre 30 % et 60 %, de préférence entre 35 et 50 %.

2. Préparation adhésive selon la revendication 1, caractérisée en ce que les alcools polyvinyliques ont une viscosité d'environ 4 à 60 mPa · s. en solution aqueuse à 4 % et à 20 °C, et de préférence 10 à 40 mPa · s.

3. Préparation adhésive selon une des revendications 1 et 2, caractérisée en ce que la quantité de l'alcool polyvinylique à degré d'hydrolyse le plus faible par rapport à l'alcool polyvinylique de degré d'hydrolyse plus élevé est comprise entre 1/9 et 9/1, de préférence entre 1/3 et 3/1.

4. Préparation adhésive selon l'une des revendications 1 à 3, caractérisée en ce qu'elle contient 5 à 95 % d'une charge minérale choisie dans le groupe constitué par les carbonates de calcium naturels ou précipités, les kaolins, les argiles.

5. Préparation adhésive selon l'une des revendications 1 à 4, caractérisée en ce qu'elle contient 15 à 40 % d'agent fluidifiant et/ou d'agent rétenteur d'eau et de fluidifiant, 40 à 80 % de charge minérale.

6. Préparation adhésive selon l'une des revendications 1 à 5, caractérisée en ce que l'agent rétenteur d'eau et fluidifiant est l'urée.

7. Préparation adhésive selon l'une des revendications 1 à 6, caractérisée en ce qu'elle contient une préparation classique à base d'amidon.

8. Application de la préparation adhésive selon l'une des revendications 1 à 7 pour le collage du papier.

9. Utilisation de la préparation adhésive selon l'une des revendications 1 à 7 pour la fabrication de sacs en papier, notamment de sacs de grande contenance.

10. Sac en papier, caractérisé en ce qu'il est formé d'éléments assemblés par la préparation adhésive selon l'une des revendications 1 à 7.

## Claims

1. An aqueous adhesive preparation containing polyvinyl alcohol, at least one fluidising agent and/or an agent which is a fluidising agent and also retains water, and optionally a mineral filler, characterised in that it comprises, as a percentage of the total weight of solid material, 5 to 95 % of fluidising agent, 0 to 95 % of mineral filler, and 5 to 30 % of at least two polyvinyl alcohols having different degrees of hydrolysis, one having a degree of hydrolysis of at least 98 % and the other having a degree of hydrolysis not exceeding 93 %, and in that it has a content of dry matter from 30 % to 60 %, preferably from 35 to 50 %.

2. Adhesive preparation according to claim 1, characterised in that the polyvinyl alcohols have a viscosity of about 4 to 60 mPa·s in 4 % aqueous solution at 20 °C, preferably 10 to 40 mPa·s.

3. Adhesive preparation according to one of claims 1 and 2, characterised in that the ratio of the quantity of polyvinyl alcohol having a lower degree of hydrolysis to the quantity of polyvinyl alcohol having the higher degree of hydrolysis is from 1 : 9 to 9 : 1, preferably from 1 : 3 to 3 : 1.

4. Adhesive preparation according to one of claims 1 to 3, characterised in that it contains from 5 to 95 % of a mineral filler selected from the group formed by natural or precipitated calcium carbonates, kaolins and clays.

5. Adhesive preparation according to one of claims 1 to 4, characterised in that it contains from 15 to 40 % of fluidising agent and/or an agent which is a fluidising agent and also retains water, and from 40 % to 80 % of mineral filler.

6. Adhesive preparation according to one of claims 1 to 5, characterised in that the fluidising and water-retaining agent is urea.

7. Adhesive preparation according to one of claims 1 to 6, characterised in that it contains a known preparation based on starch.

8. Application of the adhesive preparation according to one of claims 1 to 7 to adhesion of paper.

9. Use of the adhesive preparation according to one of claims 1 to 7 to manufacture of paper bags, notably bags of high capacity.

10. A paper bag, characterised in that it is formed of elements assembled together by means of the adhesive preparation according to one of claims 1 to 7.

## Ansprüche

1. Wässriges Haftmittel, enthaltend Polyvinylalkohol, wenigstens ein Verflüssigungsmittel und/oder ein Verflüssigungsmittel, das auch wasserbindend ist, und gegebenenfalls einen mineralischen Anteil, dadurch gekennzeichnet, daß es bezogen auf das Gesamtgewicht des Feststoffanteiles ca. 5 bis 95 % Verflüssigungsmittel, 0 bis 95 % mineralischen Anteil und 5 bis 30 % wenigstens zwei Polyvinylalkohole enthält, deren Hydrolysegrade unterschiedlich und wenigstens gleich 98 % für den einen und kleiner oder gleich 93 % für den anderen sind, und daß es einen Gehalt an Trockenextrakt zwischen 30 und 60 %, vorzugsweise zwischen 35 und 50 % besitzt.

2. Haftmittel nach Anspruch 1, dadurch gekennzeichnet, daß Polyvinylalkohole eine Viskosität von ungefähr 4 bis 60 mPa·s in vierprozentiger wässriger Lösung bei 20 °C und vorzugsweise 10 bis 40 mPa·s aufweisen.

3. Haftmittel nach einem der Ansprüche 1 und 2, dadurch gekennzeichnet, daß die Menge des Polyvinylalkohols mit dem geringeren Hydrolysegrad in bezug auf den Polyvinylalkohol mit dem höheren Hydrolysegrad zwischen 1/9 und 9/1, vorzugsweise zwischen 1/3 und 3/1, beträgt.

4. Haftmittel nach einem der Ansprüche 1 bis 3, dadurch gekennzeichnet, daß es 5 bis 93 % eines mineralischen Anteils enthält, ausgewählt aus der Gruppe der natürlichen oder ausgefällten Kalziumkarbonate, Kaoline, Tone.

5. Haftmittel nach einem der Ansprüche 1 bis 4, dadurch gekennzeichnet, daß es 15 bis 40 % Verflüssigungsmittel und/oder ein verflüssigend oder wasserbindend wirkendes Mittel, und 40 bis 80 % mineralischen Anteil enthält.

6. Haftmittel nach einem der Ansprüche 1 bis 5, dadurch gekennzeichnet, daß das wasserbindende Fließmittel Harnstoff ist.

7. Haftmittel nach einem der Ansprüche 1 bis 6, dadurch gekennzeichnet, daß es ein konventionelles Mittel auf der Basis von Stärke enthält.

8. Anwendung des Haftmittels nach einem der Ansprüche 1 bis 7 zum Kleben von Papier.

9. Verwendung des Haftmittels nach einem der Ansprüche 1 bis 7 für die Herstellung von Papiersäcken, insbesondere von Säcken mit großem Fassungsvermögen.

10. Papiersack, dadurch gekennzeichnet, daß er aus mit dem Haftmittel nach einem der Ansprüche 1 bis 7 vereinigten Elementen besteht.